# EUROPEAN PATENT APPLICATION

(11) **EP 2 960 845 A1**
(43) Date of publication of application: **30.12.2015**
(21) Application number: 14174197.5
(22) Date of filing: 26.06.2014
(51) Int. Cl.: G06Q 20/32, G06Q 20/42, G06Q 10/02

(54) **Automatic initialization of payment process for smart phone applications**

(71) Applicant: Siemens Aktiengesellschaft, 80333 München (DE)
(72) Inventor: Vyvial, Pavel, 735 32 Rychvald (CZ)
(74) Representative: Maier, Daniel Oliver

(57) **Abstract**

For an automatic initialization of a payment process (90) for buying a ticket (9) by means of a smart phone application (2), the following steps are performed:
- automatically verifying (11, 21) by the smart phone application (2) running on a smart phone (1) if a user potentially desires to buy a ticket (9);
- prompting (80) the user by the smart phone application (2) to enter into the smart phone (1) whether the user desires to buy the ticket (9) when the smart phone application (2) recognized that the user potentially desires to buy the ticket (9);
- starting (85) the payment process (90) if the prompting (80) is responded (81) by a command (91) to buy the ticket (9).

The potential interest of the user can be determined by measuring (12) the GPS position of the smart phone (1).

## Description

The invention relates to the technical field of payment processes for buying tickets by means of a smart phone application.

Hemminki S., Nurmi P., Tarkoma S.: "Accelerometer-Based Transportation Mode Detection on Smartphones", Proceedings of ACM SenSys, 2013 discloses accelerometer-based techniques for accurate and fine-grained detection of transportation modes on smartphones.

It is also known to buy tickets for public transport by means of a smart phone application. The initialization of the payment process is part of a smart phone application and done by a user action, for example by clicking to some button. The initialization is not automatic and therefore the user has to make some action in order to start the payment process. This is not consumer friendly.

It is therefore the objective to facilitate the payment process for buying a public transport ticket. This problem is solved by the solutions as described by the independent claims.

According to an aspect of the invention, a method for an automatic initialization of a payment process is proposed. The payment process is for buying a ticket by means of a smart phone application. According to the method, the smart phone application runs on a smart phone and verifies automatically if the user of the smart phone potentially desires to buy a ticket. The user is prompted by the smart phone application to enter into the smart phone whether it is desired to buy the ticket if the smart phone application recognized that the user potentially desires to buy the ticket. The payment process is started if the prompting is responded by a command to buy the ticket.

According to another aspect of the invention, a system for an automatic initialization of a payment process is proposed. The system comprises means that are adapted for performing the method steps of preferred embodiments of the method.

In the following the invention is described on the basis of embodiments illustrated on the basis of the figures.
Figure 1 shows a block diagram of a system comprising means adapted for performing an automatic initialization of a payment process for buying a ticket according to an embodiment of the invention.
Figure 2 shows a flow chart for a method for an automatic initialization of a payment process for buying a ticket according to another embodiment of the invention.
Figure 3 shows a flow chart for a method for an automatic initialization of a payment process for buying a ticket for public transport according to another embodiment of the invention.

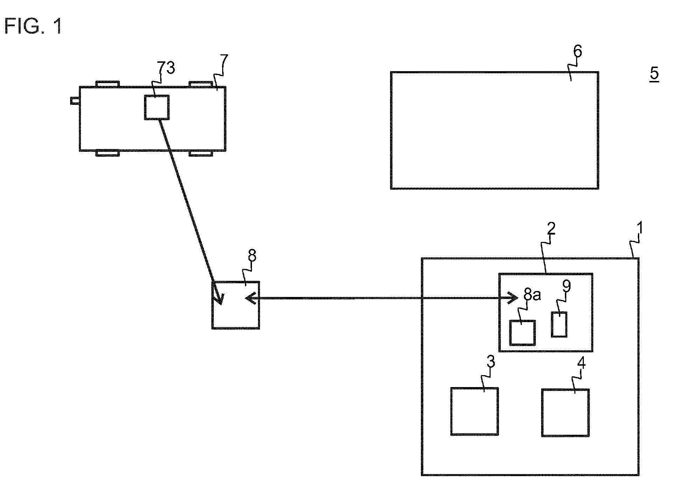

Figure 1 shows a public transport system 5. The public transport system 5 comprises a smart phone 1, a stopping point 6, a public transport vehicle 7. The smart phone 1 comprises a public transport smart phone application 2 that is executable on the smart phone. Furthermore, the smart phone comprises a GPS module 3 and/or an accelerator module 4. The smart phone 1 can further comprise a database 8a and/or the public transport system can comprise a central database 8 that is accessible by the smart phone application 2.

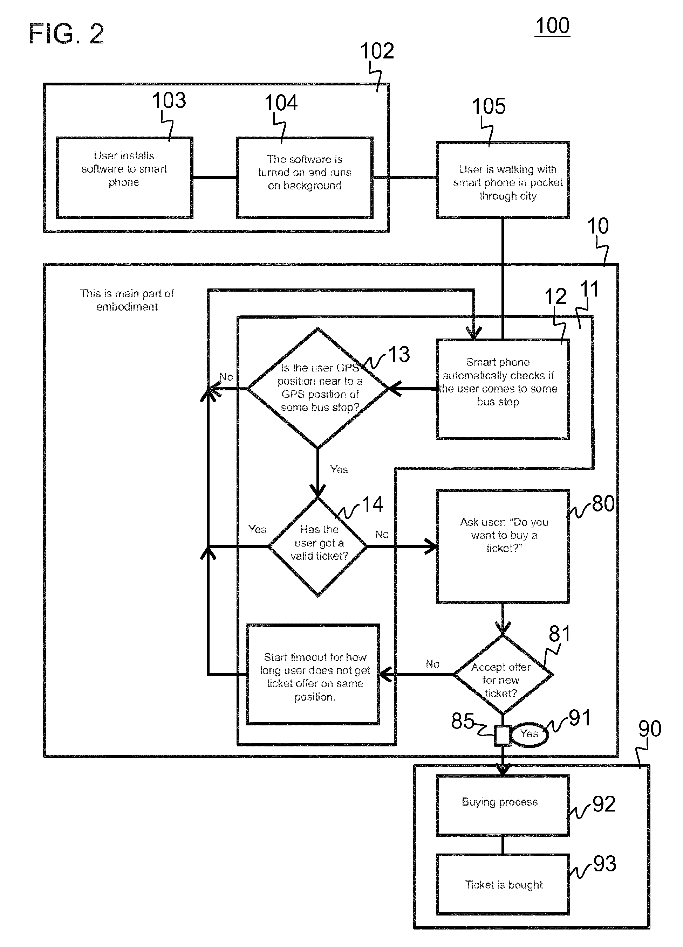

Figure 2 shows a method 100 for handling information needs of a user of a public transport system 5. The method 100 comprises a payment process 90, a method 10 for an automatic initialization of the payment process 90, and a process 102 of installing a program for performing the method 10. The process 102 is usually performed just one time and includes a process step 103 of installing software for the public transport application 2 to the smart phone 1 and the process step 104 of turning on and running the application 2 in the background of the smart phone 1. Step 105 indicates that the user of the smart phone 1 and public transport system 5 is walking with the smartphone 1 in his pocket.

The method 10 for the automatic initialization 10 of the payment process 90 is for buying a ticket 9 for public transport by means of the smart phone application 2. The method 10 comprises a method step 11 of automatically verifying by the smart phone application 2 running on a smart phone 1 if the user potentially desires to buy a ticket 9 for public transport. The method 10 further comprises a method step 80 of prompting the user to type into the smart phone 1 whether the user desires to buy the ticket 9 when the smart phone application 2 recognized that the user potentially desires to buy the ticket 9. The prompting is done by the smart phone application 2. If the prompting 80 is responded by a command 91 of buying the ticket 9 the payment process 90 is caused to start in method step 85.

The payment process 90 comprises a process step 92 of buying the ticket. Reference sign 93 indicates that the ticket is bought.

In order to measure the position of the smart phone 1, the smart phone 1 comprises the GPS module 3. The method step 11 of automatically verifying if the user potentially desires to buy the ticket 9 comprises that the GPS module 3 measures in method step 12 a position of the smart phone 1 in order to automatically check in method step 13 if the measured position of the smartphone matches with a position of a public transport infrastructure. The public transport infrastructure can for example be a stopping point 6 of a public transport vehicle 7, or a public transport vehicle itself 7.

In other words, according to preferred embodiments, the smart phone 1 comprises a GPS module 3, and the method step 11 of automatically verifying that a user potentially desires to buy a ticket 9 comprises that the GPS module 3 measures in method step 12 the position of the smart phone 1. The measured position of the smart phone 1 is then compared with the position of a stopping point 6 of a public transport vehicle 7 and/or with the position of the public transport vehicle 7.

The public transport vehicle 7 can for example be a bus, and the stopping point 6 can for example be a bus stop. The advantage of comparing the measured position of the smart phone 1 with a stopping point such as a bus stop is that the stopping point is static. It is therefore sufficient for the application to verify or have verified in method step 13 whether the measured position of the smart phone is sufficiently near to a stored GPS position of the bus stop. Therefore, the smart phone 1 and/or the application 2 preferably comprises a database 8a comprising the position of the bus stop. Having the data base 8a locally stored in the smart phone results in the advantage that it the verification if the user potentially desires to buy a ticket can be performed more quickly than if the smart phone 1 would check 13 online, by means of an online database, if the measured position of the smartphone matches with a position of a stopping point 6.

A preferred embodiment based on comparing the measured position of the smart phone 1 with a stopping point of the public transport system comprises the following:
- The application 2 for buying a ticket through a smart phone, like HandyTicket, runs on the background of the smart phone 1. The application 2 is implemented as a part of a software solution. The smart phone has a turned on GPS module 3.
- The smart phone 1 has some data tariff for Internet access.
- For a variant, which represents an easy to implement embodiment, a database of bus stop GPS coordinates of an area, such as a city, region, or state, is provided, where the application 2 can be used for buying tickets for public transport.

This simple variant preferably involves a database 8a that is stored on the smart phone 1. The database 8a comprises GPS information about the stopping points 6 of the public transport system 5. From a user perspective, the embodiment therefore works as follows:
- The user installs the application 2 to the smart phone 1.
- The application 2 is running on the background of the smart phone 1. So, the smart phone 1 can be used for other things at the same time.
- The user is walking through a city and comes to some bus stop 6.
- The application 2 automatically detects that the user comes to the bus stop 6 by comparing the current user position with GPS coordinates of bus stops. If the position measured by the GPS module 3 matches with some stopping point stored in the database 8a, the application 2 automatically asks the user if a ticket 9 should be bought. The user is informed about this by a message on the smart phone 1 accompanied by a sound and a vibration.
- The user can accept buying the ticket 9 or cancel it by clicking on cancel or ignoring this kind of message.

In turn, if the measured position of the smart phone 1 is compared with the position of the public transport vehicle 7, unnecessary prompting of the user can be avoided, e.g. when there is no bus arriving at the bus stop for a long time, or when the user does not enter the bus. If the measured position of the smart phone 1 is compared with the position of the public transport vehicle 7, some means for communicating the position of the public transport vehicle 7 are required. This can for example be achieved by measuring the position of a bus 7 by means of a vehicle GPS module 73 that is comprised by the public transport vehicle 7. The vehicle GPS module 73 transmits the position of the public transport vehicle 7 to a central database 8 that is accessible by the smart phone application 2.

For a more extended embodiment, based on comparing the measured position of the smart phone 1 with positions of public transport vehicles, GPS modules are therefore installed to all public transport vehicles of the public transport system 5, like buses, trams, etc. GPS coordinates of the public transport vehicles are transferred to the central database 8 which is accessible from application 2.

If the position of the smart phone matches the position of the public transport infrastructure, the user of the smart phone 1 is prompted according to method step 80. However, before prompting the user, in order to avoid unnecessary prompting, after method step 13, it can be verified in method step 14, if the user already has a valid ticket. The method step of automatically verifying 11 that a user potentially desires to buy a ticket 9 comprises therefore the method step 14 of verifying whether the user already has a valid ticket. Only if the user has no valid ticket yet, method step 80 is performed and the user is prompted by the smart phone application 2 whether the user wants to buy a ticket. As indicated in condition 81, if the user accepts the offer of buying a new ticket, e.g. by responding "yes" to the prompting 80, thus by a command 91 of buying the ticket 9, then the payment process 90 is caused to start in method step 85.

According to a preferred embodiment, the method step of automatically verifying 11 by the smart phone application 2 that a user potentially desires to buy a ticket 9 for public transport is automatically iterated. This can for example be done by returning to method step 12 in case in method step 13 it is found that the measured position of the smartphone does not match with a position of a public transport infrastructure ("No") and/or if in method step 14 it is found that the user has a valid ticket ("Yes"), and/or by starting a timeout period for how long the user minimally does not get any ticket offer on the same position after the user has responded to the method steps 80 and 81 by a command indicating that he does not desire to buy the ticket 9.

According to some preferred embodiments, is not necessary to make an installation of some special hardware, e.g. detectors, to public transport vehicles. A user does not have to own some special hardware. Instead he preferably just has installed and turned on the application 2 for buying a ticket in the smart phone 1. The user does not have to think about buying a ticket 9. The smart phone asks the user in the right time if the user wants to buy a ticket 9 or not.

In further embodiments, the solutions as described on the basis of figure 2 can also be varied for automatically initializing a payment process 90 for buying a ticket other than a ticket for public transport. For example, based on checking the GPS position of the smart phone 1, it is also possible to automatically initialize the payment process for buying a parking ticket or for buying an entrance ticket. Therefore the GPS module 3 measures the position of the smart phone. In case the measured position matches with a stored position of a parking space or car park or with an entrance, then the application 2 prompts the user to enter into the smart phone 1 whether the user desires to buy a ticket. The payment process for the respective ticket is then started if the prompting is responded by a command to buy the ticket. Referring to figure 1, an embodiment of the inventive system 1, 2, 5 can then be achieved by adapting the application 2 and/or by adapting the smart phone 1 and/or by adapting the system 5 for example such that in the data base 8a and/or in the central data base 8 the position of the respective infrastructure is stored. In other words, the data base 8a and/or the central data base 8 has for example stored the position of the parking space and/or the car park and/or the entrance.

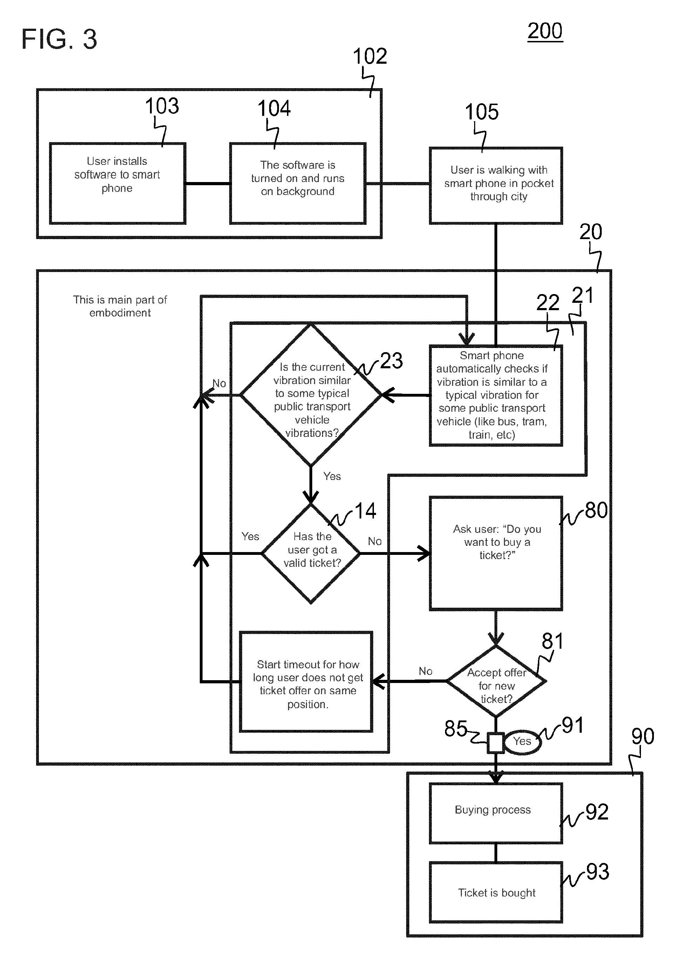

Figure 3 shows a method 200 for handling information needs of a user of a public transport system 5 that is similar to the method 100 as shown in figure 2. The method steps 102, 105, 80, 81, 90 can be identical or equivalent as in figure 2, while method steps 10, 11, 12, 13 are replaced by method steps 20, 21, 22, 23 respectively, as described in the following. Therefore, instead of or in addition to the GPS module 3, the smart phone 1 comprises the accelerator module 4. The embodiment of figure 3 therefore is based on using an accelerometer for automatic initialization of the payment process 90. The method step of automatically verifying 21 that a user potentially desires to buy a ticket 9 comprises metering 22 a vibration pattern by means of the accelerator module 4 of the smart phone 1. The smart phone 1 is therefore adapted to automatically check if the vibration is similar to a typical vibration for some public transport vehicle such as a bus, a tram, a train, etc. In method step 23 said metered vibration pattern is compared with a prerecorded vibration patterns for public transport vehicles 7. The user is prompted 80 only if the metered vibration pattern matches a prerecorded pattern of a public transport vehicle 7, thus only if the metered vibration pattern is similar to some typical public transport vehicle vibrations. Preferably prerecorded patterns equivalent to the ones disclosed in Hemminki S., Nurmi P., Tarkoma S.: "Accelerometer-Based Transportation Mode Detection on Smartphones", Proceedings of ACM SenSys, 2013 are used in order to identify a class of a vehicle the user is currently using. In case the metered vibration pattern matches with a prerecorded vibration pattern for a class of public transport vehicles, such as busses, trains, trams, etc., this is interpreted as an indication that the user potentially desires to buy a public transport ticket 9. This solution is advantageous, since the user is only prompted when he is in a public transport vehicle 7. Unnecessary prompting can thus be avoided, while no modifications need to be done in the public transport vehicle 7, and the prerecorded vibration patterns can be stored locally equivalently to the position of the stopping points in the embodiment of figure 2, in the smart phone 1, e.g. in the database 8a.

According to a preferred embodiment, the method step of automatically verifying 21 by the smart phone application 2 that a user potentially desires to buy a ticket 9 for public transport is automatically iterated. This can for example be done by returning to method step 22 in case in method step 23 it is found that the metered vibration pattern does not match with a prerecorded vibration pattern for a public transport vehicle ("No") and/or if in method step 14 it is found that the user has a valid ticket ("Yes"), and/or by starting a timeout period for how long the user minimally does not get any ticket offer on the same position after the user has responded to the method steps 80 and 81 by a command indicating ("No") that he does not desire to buy the ticket 9.

A preferred embodiment for automatic initialization of a payment process for smart phone applications based on vibration analysis comprises the following:
- An application 2 for buying a ticket through a smart phone (like HandyTicket) runs in the background of a smart phone 1. This application 2 has implemented Accelerometer-Based Transportation Mode Detection on Smartphones.
- The smart phone 1 has a turned on accelerometer module.
- The smart phone 1 has some data tariff for Internet access.

This preferred embodiment works as follows:
- A user installs a application 2 to the smart phone.
- A application 2 is running in background of smart phone 1 so the smartphone can be used for other things at the same time.
- The user is walking through a city and enters some public transport vehicle 7.
- When the public transport vehicle 7 starts riding, the application 2 automatically analyses vibrations through the accelerometer module 4. If it finds a match, thus if a currently measured vibration is similar to a typical vibration for some public transport vehicle, the application 2 automatically asks the user if the user want to buy a ticket 9. The user is informed about this by a message on the smart phone accompanied with sound and vibration.
- The user can accept buying a ticket 9 or cancel it by clicking on cancel or ignoring this kind of message.

Solutions based on comparing vibration patterns result in an advantage that it is not necessary to install special hardware, e.g. detectors, to public transport vehicles 7. The user does not need to own some special hardware, apart from a smart phone that comprises an accelerometer module 4. The smart phone 1 can have installed and turned on the application 2 for buying tickets. The user does not have to remember buying a ticket. The smart phone 1 asks the user in the right time if the user wants to buy a ticket or not. An advantage of such an embodiment is that less electric energy is consumed in order to detect vibrations by means of the accelerometer as compared to detection of position through GPS.

An embodiment of the invention solves the problem of automatic initialization of a payment process for smart phone applications. An embodiment of the invention can be used for buying a ticket for public transport through a smart phone, e.g. by means of a HandyTicket application 2. An embodiment of the invention ensures that the user does not need to keep in mind that he has to buy a ticket since he is automatically reminded by the application to initialize the payment process.

According to an embodiment, the application 2 automatically asks a user in the right time if he/she wants to buy ticket when he/she enters into a public transport vehicle (like bus, train, tram, etc.) or waits at a stopping point such as a bus stop.

Preferred embodiments work similar to solutions using a special card for public transport which is automatically detected when the user enters the bus and makes a payment for ride. Instead of using some special card by user and installation of card detectors to all public transport vehicles preferred embodiments require just a software application in a smart phone and no special hardware like cards, detectors, etc.

## Claims

1. Method (10, 20) for an automatic initialization of a payment process (90) for buying a ticket (9) by means of a smart phone application (2), comprising the steps of:
- automatically verifying (11, 21) by the smart phone application (2) running on a smart phone (1) if a user potentially desires to buy a ticket (9);
- prompting (80) the user by the smart phone application (2) to enter into the smart phone (1) whether the user desires to buy the ticket (9) when the smart phone application (2) recognizes that the user potentially desires to buy the ticket (9) ;
- starting (85) the payment process (90) if the prompting (80) is responded (81) by a command (91) to buy the ticket (9).

2. The method of claim 1, wherein the smart phone (1) comprises a GPS module (3) and wherein the method step of automatically verifying (11) if a user potentially desires to buy a ticket (9) comprises that the GPS module (3) measures (12) a position of the smart phone (1) in order to check (13) if the measured position of the smartphone matches with a position of an infrastructure (6, 7).

3. The method of claim 2, wherein the infrastructure is a stopping point (6) of a public transport vehicle (7).

4. The method of claim 2, wherein the infrastructure is a public transport vehicle (7).

5. The method of claim 4, wherein the public transport vehicle (7) comprises a vehicle GPS module (73), transmitting the position of the public transport vehicle (7) to a database (8) that is accessible by the smart phone application (2).

6. The method of any one of the preceeding claims, wherein the smart phone (1) comprises a GPS module (3), wherein the method step of automatically verifying (11) that a user potentially desires to buy a ticket (9) comprises measuring (12) a position of the smart phone (1) by the GPS module, and comparing said measured position of the smart phone (1) with the position of a stopping point (6) of a public transport vehicle (7) and/or with the position of the public transport vehicle (7) and/or with the position of a parking space and/or with the position of a car park and/or with the position of an entrance.

7. The method of any one of the preceding claims, wherein the method step of automatically verifying (21) that a user potentially desires to buy a ticket (9) comprises metering (22) a vibration pattern by means of an accelerator module (4) of the smart phone (1), and comparing (23) said metered vibration pattern with a prerecorded vibration pattern for the public transport vehicle (7).

8. The method of any one of the preceding claims, wherein the smart phone application (2) generates a sound and a vibration when prompting (80) the user.

9. The method of any one of the preceding claims, wherein the smart phone application (2) runs in the background of the smart phone (1).

10. The method of any one of the preceding claims, wherein the method step of automatically verifying (11, 21) that a user potentially desires to buy a ticket (9) comprises verifying whether the user already has a valid ticket.

11. The method of any one of the preceding claims, wherein the method step of automatically verifying (11, 21) by the smart phone application (2) that a user potentially desires to buy a ticket (9) is automatically iterated.

12. The method of any one of the preceding claims, wherein the method (10, 20) is timed out for a predetermined time period if the prompting (80) is responded (81) by a command not to buy the ticket (9).

13. The method of any one of the preceding claims, wherein the ticket (9) is a ticket (9) for public transport.

14. System (1, 2, 5) comprising means adapted for performing the method steps of any one of the preceding claims.
